# EUROPEAN PATENT APPLICATION

(11) **EP 3 251 897 A1**
(43) Date of publication of application: **06.12.2017**
(21) Application number: 16197313.6
(22) Date of filing: 04.11.2016
(51) Int. Cl.: B60Q 9/00, G08G 1/16, B60Q 1/52, B60Q 7/00, F42B 12/48, G08B 5/40, B62D 15/02, G08G 1/00, H04M 1/725, B60R 21/00

(54) **VEHICULAR WARNING DEVICE AND VEHICULAR WARNING SYSTEM INCLUDING THE SAME**

(30) Priority: 02.06.2016 KR 20160068505
(71) Applicant: Schaffengott Co., Ltd., Busan 48060 (KR)
(72) Inventor: KWON, Ik Hwan, 48060 Busan (KR)
(74) Representative: Zardi, Marco

(57) **Abstract**

Disclosed is a vehicular warning system including a collision detecting sensor that is installed in a bumper of a vehicle, a user client that determines whether a traffic accident occurs, by using the collision detecting sensor, displays a screen for selecting transmission of an emergency signal for ejecting powder when it is determined that a traffic accident has occurred or a cancel, and transmits an emergency signal when receiving a selection input for selecting transmission of the emergency signal or not receiving a selection input for a specific period of time, and a warning device that includes a powder signal that is installed on a roof of the vehicle and is used to propagate a danger signal to neighboring vehicles by ejecting powder, an accommodation portion in which the powder signal is accommodated, and a cover that closes the accommodation portion, the warning device being configured to automatically open the cover when receiving the emergency signal and to eject powder by using the powder signal.

## Description

### BACKGROUND

Embodiments of the inventive concept described herein relate to a vehicular warning device and a vehicular warning system including the same.

When a traffic accident occurs, a means for delivering a warning message to a following vehicle is necessary to prevent a secondary accident. A tripod has to be installed 100 m behind an accident site on an expressway, but it may be very dangerous to directly install the tripod due to the vehicles that travel at a high speed.

Further, when a traffic accident occurs, the driver may be hectic, wounded, or unconscious. In this case, it is even more difficult for the driver to install a tripod. Accordingly, a technology for efficiently delivering a warning message to a following vehicle and transmitting a rescue signal to prevent a secondary accident when a traffic accident occurs has been required.

### SUMMARY

Embodiments of the inventive concept provide a vehicular warning device that may prevent a secondary accident and a vehicular warning system including the same.

The technical objects of the inventive concept are not limited to the above-mentioned ones, and the other unmentioned technical objects will become apparent to those skilled in the art from the following description.

In accordance with an aspect of the inventive concept, there is provided a vehicular warning system including a collision detecting sensor that is installed in a bumper of a vehicle, a user client that determines whether a traffic accident occurs, by using the collision detecting sensor, displays a screen for selecting between transmission of an emergency signal for ejecting powder and cancellation, when it is determined that a traffic accident has occurred, and transmits an emergency signal when receiving a selection input for selecting transmission of the emergency signal or not receiving any selection input for a specific period of time, and a warning device that is installed on a roof of the vehicle and comprises a powder signal that is used to propagate a danger signal to neighboring vehicles by ejecting powder, an accommodation portion in which the powder signal is accommodated, and a cover that closes the accommodation portion, the warning device being configured to automatically open the cover when receiving the emergency signal and to eject powder by using the powder signal.

The warning device may further include an uplighter for illuminating the ejected powder.

The warning device may further include a strobe light for propagating a danger signal towards at least one of a front side, a lateral side, and a rear side of the vehicle by using light.

The warning device may further include a light sensor that detects light of a strobe light of a warning device installed in a preceding vehicle, and the warning device may determine whether a traffic accident of the front vehicle has occurred by using the light sensor, and displays an emergency signal to a following vehicle by using the light of the strobe light of the vehicle when determining that the traffic accident of the preceding vehicle has occurred.

The strobe light of the warning device installed in the preceding vehicle may display a message regarding the traffic accident by using a color and a flickering pattern of the light, and the warning device may detect the color and the flicking pattern of the light of the preceding vehicle by using the light sensor, acquires the message by using the color and the flickering pattern, and may deliver the message to the following vehicle by using a color and a flickering pattern of the light of the strobe light of the vehicle.

The warning device may further include at least one solar panel that is arranged on an outer surface of the warning device to supply electric power to the warning device.

The warning device may further include a camera for photographing a front side or a rear side of the vehicle, and the user client may receive an image of the front side or the rear side of the vehicle that has been captured by the camera and display the received image on a screen of the user client.

The warning device may further include a magnetic pad for attaching the warning device to the roof, and the magnetic pad may be curved based on a deflection of the roof.

The user client may transmit a rescue signal along with the emergency signal, which includes at least one of the occurrence of the traffic accident and location information of the user client, to a preset contact address

The vehicular warning system may further include a server that acquires a rescue signal that is transmitted by one or more user clients, and the server may build and store a database for information on locations of the one or more traffic accidents and states of scenes of the one or more traffic accidents by using the required rescue signal.

The user client may update navigation information of the user client by using the database stored in the server.

In accordance with an aspect of the inventive concept, there is provided a vehicular warning device including a powder signal that is used to propagate a danger signal to neighboring vehicles of a vehicle by using powder, an accommodation portion in which the powder signal is accommodated, and a cover that closes the accommodation portion, and the cover is automatically opened when a traffic accident occurs and the powder is ejected by using the power signal.

The other detailed items of the inventive concept are included in the detailed description of the inventive concept and the drawings.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a diagram illustrating a vehicular warning system according to an embodiment;
FIG. 2 is a view illustrating a user client according to an embodiment;
FIGS. 3 and 4 are views illustrating a vehicular warning device according to an embodiment; and
FIG. 5 is a view illustrating an example in which the warning device delivers a warning message to a following vehicle.

### DETAILED DESCRIPTION

The above and other aspects, features and advantages of the inventive concept will become apparent from the following description of the following embodiments given in conjunction with the accompanying drawings. However, the inventive concept is not limited to the embodiments disclosed below, but may be implemented in various forms. The embodiments of the inventive concept is provided to make the disclosure of the inventive concept complete and fully inform those skilled in the art to which the inventive concept pertains of the scope of the inventive concept.

The terms used herein are provided to describe the embodiments but not to limit the inventive concept. In the specification, the singular forms include plural forms unless particularly mentioned. The terms "comprises" and/or "comprising" used herein does not exclude presence or addition of one or more other elements, in addition to the aforementioned elements. Throughout the specification, the same reference numerals dente the same elements, and "and/or" includes the respective elements and all combinations of the elements. Although "first", "second" and the like are used to describe various elements, the elements are not limited by the terms. The terms are used simply to distinguish one element from other elements. Accordingly, it is apparent that a first element mentioned in the following may be a second element without departing from the spirit of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

The terms, such as "below", "beneath", "lower", "above", and "upper", which are spatially relative may be used to easily describe a correlation between one element and other elements as illustrated in the drawings. The spatially relative terms have to be understood as terms including different directions of the elements during use or an operation, in addition to the direction illustrated in the drawings. For example, the elements illustrated in the drawings are overturned, the elements "below" or "beneath" another element may be positioned "above" the other element. Accordingly, the term "below", or "beneath" may include "below" or "beneath", and "above". The element may be oriented in different directions, and accordingly, the spatially relative terms may be construed according to the orientation.

Hereinafter, exemplary embodiments of the inventive concept will be described in detail with reference to the accompanying drawings.

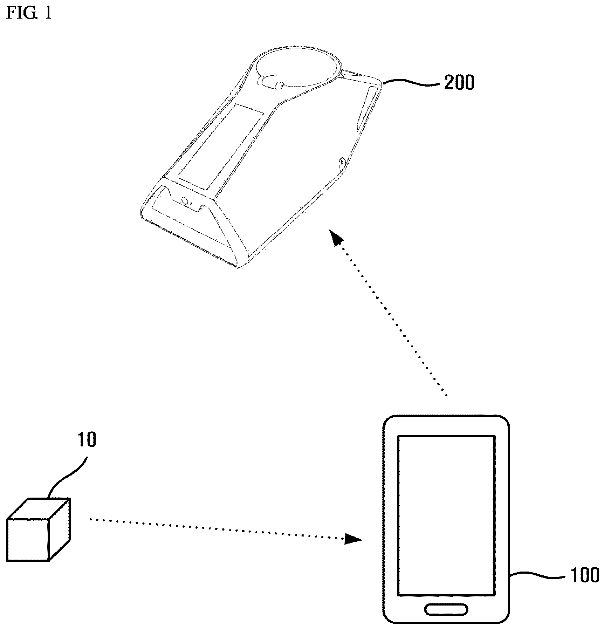

FIG. 1 is a diagram illustrating a vehicular warning system according to an embodiment.

Referring to FIG. 1, a collision detecting sensor 10, a user client 100, and a warning device 200 are illustrated.

The collision detecting sensor 10 is installed in a bumper of a vehicle. In an embodiment, the collision detecting sensor 10 may be installed inside and outside of the bumper of the vehicle, and a collision detecting sensor installed in the vehicle in advance may be used.

In another embodiment, the collision detecting sensor 10 may be embedded in the warning device 200.

The collision detecting sensor 10 transmits detected information to the user client 100. In an embodiment, the user client 100 may be a smartphone of the driver. In another embodiment, the user client 100 may be a navigation system or other computing devices installed in the vehicle.

The user client 100 may determine whether a traffic accident occurs by using collision information detected by the collision detecting sensor 10. For example, when the collision detecting sensor 10 detects a collision of an intensity that exceeds a specific threshold value, the user client 100 may determine that a traffic accident has occurred.

When determining that a traffic accident has occurred, the user client 100 displays a screen for selecting transmission of an emergency signal for ejecting powder or a cancel. When receiving a selection input for selecting transmission of a signal or failing to receive a selection input for a specific period of time, the user client 100 may transmit an emergency signal to the warning device 200.

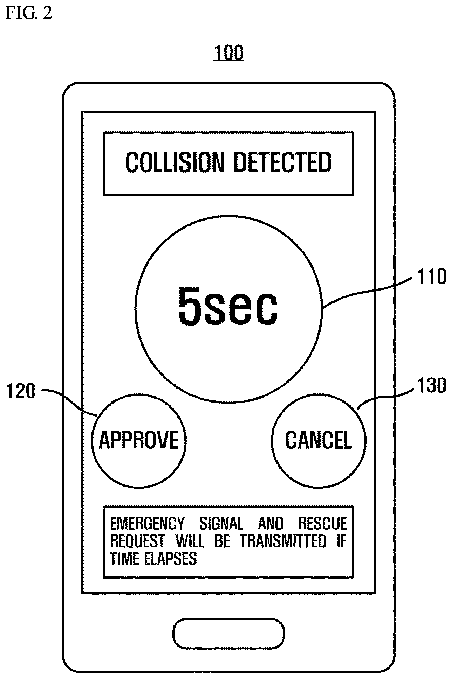

Referring to FIG. 2, an example of a screen that is displayed on the user client 100 is illustrated. In an embodiment, specific time information 110, an approval selecting unit 120, and a cancel selecting unit 130 may be displayed on the screen of the user client 100.

For example, when receiving collision detection information from the collision detecting sensor 10, the user client 100 may determine that a traffic accident has occurred.

The user client 100 may display a screen for selecting transmission of an emergency signal for ejecting powder or a cancel. Referring to FIG. 2, a time information display unit 110, an approval selecting unit 120, and a cancel selecting unit 130 may be provided on the screen of the user client 100.

In an embodiment, a specific period of time may be displayed on the time information display unit 110. For example, a specific period of time of 5 to 10 seconds may be displayed on the time information display unit 110, and a countdown may be started.

The user client 100 may receive a selection input to the approval selecting unit 120 or the cancel selecting unit 130 while a countdown for a specific period of time displayed on the time information display unit 110 progresses.

When the user client 100 receives a selection input for the approval selecting unit 120, the user client 100 may transmit an emergency signal for ejecting powder to the warning device 200.

When receiving a selection input to the cancel selecting unit 130, the user client 100 may stop a countdown. For example, it may be a minor collision or a situation that does not require transmission of an emergency signal even though the collision detecting sensor 10 detects a collision. In this case, the driver may prevent unnecessary transmission of an emergency signal by performing a cancel input through the cancel selecting unit 130.

When not receiving a selection input for an approval or a cancel until the countdown for a specific period of time displayed on the time information display unit 110 is completed, the user client 100 may transmit an emergency signal for ejecting powder to the warning device 200.

For example, the driver may not perform a selection input because he or she is hectic, wounded, or unconscious. Accordingly, if not receiving a selection input even after a specific period of time, the user client 100 may transmit an emergency signal for ejecting powder to the warning device 200.

In an embodiment, the user client 100 may transmit a rescue signal including at least one of a fact that a traffic accident has occurred and location information of the user client 100 together with an emergency signal to a preset contact address.

When a traffic accident occurs and an emergency signal for ejecting powder is transmitted to the warning device 200 due to an approval of the driver or elapse of a specific period of time, the user client 100 may transmit a rescue signal to a preset contact address.

For example, the rescue signal may include at least one of a current location of the user client 100, a fact that a traffic accident has occurred, and a preset rescue request message.

Further, the present contact address may include at least one of a fire station, a police station, and an insurance company. Further, the preset address may include a phone number of a family member or a friend.

The warning device 200 is installed on a roof of the vehicle. In another embodiment, the warning device 200 may be installed on any one of a front side, an upper side, a rear side, and a lateral side of the outside of the vehicle (for example, a hood that covers an engine room or a hood that covers a trunk).

When receiving an emergency signal from the user client 100, the warning device 200 may propagate a danger signal to neighboring vehicles by ejecting powder.

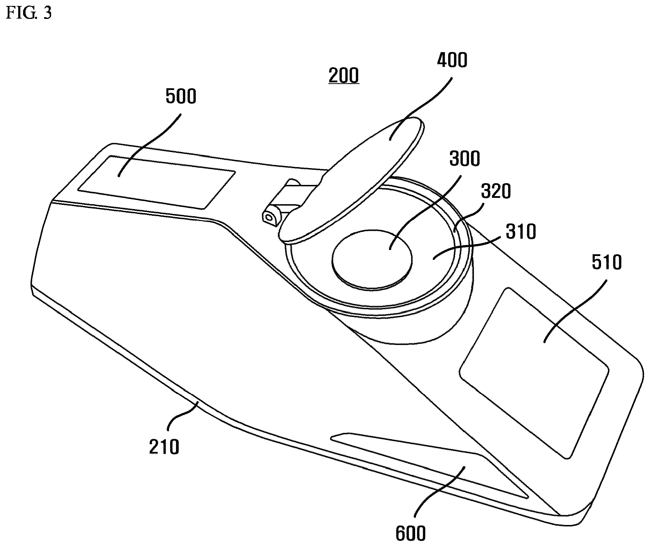

In an embodiment, the powder ejected by the warning device 200 may be white powder or other powder of a high visibility. The kind of the powder that may be ejected by the warning device 200 is not limited. FIG. 3 is a view illustrating a warning device according to an embodiment.

In an embodiment, the warning device 200 may be fixed to a roof of the vehicle by using a piece.

In an embodiment, the warning device 200 includes a magnetic pad 210 that is used to attach the warning device 200 to a roof of the vehicle. The magnetic pad 210 may be curved based on a deflection of the roof of the vehicle. For example, the magnetic pad 210 may be a rubber magnet.

The warning device 200 includes a powder signal 300 that is used to propagate a danger signal to neighboring vehicles by using power. Further, the warning device 200 includes an accommodation portion 310 that accommodates the powder signal 300 and a cover 400 that closes the accommodation portion 310.

In an embodiment, the powder signal 300 may be a disposable powder signal 300. The accommodation portion 310 of the warning device 200 detachably accommodates the powder signal 300. Accordingly, after being used, the powder signal 300 may be replaced by a new one.

The cover 400 may be used to prevent external foreign substances from entering the powder signal 300 and the accommodation portion 310. The cover 400 may be automatically opened when the warning device 200 receives an emergency signal. The warning device 200 may open the cover 400, and may eject powder by using the powder signal 300.

In an embodiment, one or more air holes may be formed around the accommodation portion 310. The warning device 200 may lift powder high by ejecting air through the one or more air holes formed around the accommodation portion 310.

In an embodiment, the warning device 200 may propagate a warning signal to the neighboring vehicles by lifting the powder high by using compressed air.

In an embodiment, when it is severely windy around the vehicle, the powder may not be lifted high but may spread around. In this case, the propagation effect of the emergency signal may deteriorate, and the powder may disturb the fields of view of the neighboring vehicles or make the neighboring vehicles dirty.

Accordingly, the warning device 200 may force the powder to be lifted vertically high without spreading around the surroundings by strongly ejecting air through the air holes formed around the accommodation portion 310.

In an embodiment, the warning device 200 may include a sensor for measuring an intensity of wind. The warning device 200 may adjust an intensity of a flow of air that is injected through the air holes formed around the accommodation portion 310 based on the measured intensity of the wind. Accordingly, the warning device 200 may force the powder to be lifted vertically high by ejecting air through the air holes formed around the accommodation portion 310 stronger as the intensity of the wind becomes stronger.

In an embodiment, the warning device 200 may include an uplighter 320 that is formed at a periphery of the accommodation portion 310. The warning device 200 may illuminate the ejected power by using the uplighter 320. For example, the ejected powder may not be viewed well at night. Accordingly, the warning device 200 may efficiently deliver a danger signal to the neighboring vehicles by illuminating the ejected powder by using the uplighter 320.

In an embodiment, the warning device 200 include a strobe light 600 for propagating a danger signal towards at least one of a front side, a lateral side, and a rear side of the vehicle by using light.

The warning device 200 may propagate a danger signal by using at least one of a color and a flickering pattern of the light of the strobe light 600.

In an embodiment, the warning device 200 includes at least one solar panel 500 and 510 that is arranged on an outer surface of the warning device 200 to supply electric power to the warning device 200.

In an embodiment, the warning device 200 may include a siren for propagating a danger signal to the neighboring vehicles by using a sound.

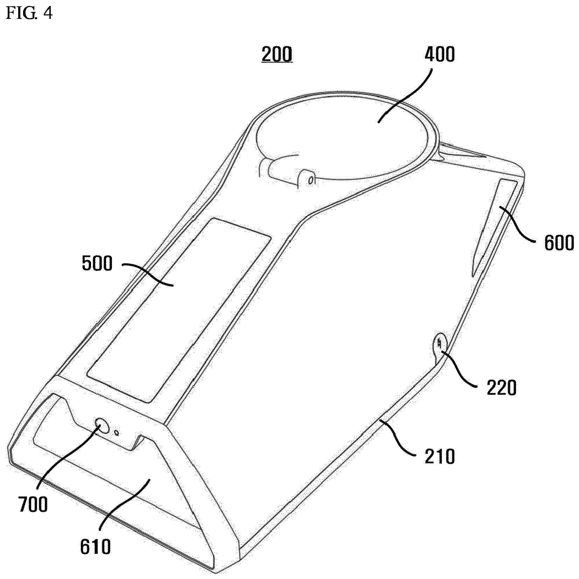

FIG. 4 is a view illustrating a warning device according to an embodiment.

The warning device 200 of FIG. 4 is obtained by viewing the warning device 200 of FIG. 3 from another side, and the contents described in relation to the warning device 200 of FIG. 3 is also applied to the warning device 200 of FIG. 4.

In an embodiment, the warning device 200 includes a power source 220 that may receive electric power from the vehicle. Because it may be difficult to acquire sufficient electric power from the solar panel 500 and 510 provided in the warning device 200, the warning device 200 may receive necessary electric power for a cigar jack or a battery of the vehicle by using the power source 220. The warning device 200 may include a rechargeable battery, and may store electric power supplied by the power source 220 in a battery.

According an embodiment, the warning device 200 includes a camera 700 for photographing a front side or a rear side of the vehicle. In an embodiment, the user client 100 may receive an image of the front side or rear side of the vehicle, which has been captured by the camera 700 and may display the received image on a screen of the user client 100.

In an embodiment, the warning device 200 may include a strobe light 610 that propagates a danger signal to a front side of the vehicle by using light and a strobe light 600 that propagates a danger signal to lateral sides and a rear side of the vehicle by using light.

The cover 400 of the warning device 200 functions to protect the powder signal 300 and the accommodation portion 310 such that foreign substances cannot enter the powder signal 300 and the accommodation portion 310, and the cover 400 may be automatically opened when the warning device 200 receives an emergency signal.

In an embodiment, the warning device 200 may include a communication unit that may communicate with the outside. For example, the warning device 200 may include a communication unit that may communicate with the user client 100, the collision detecting sensor 10, and an external server.

In an embodiment, the warning device 200 may perform communication with the user client 100 or the collision detecting sensor 10 by using a short range communication device such as a Bluetooth device. Further, the warning device 200 may perform communication with the user client 100, the collision detecting sensor 10, and the external server, by using a communication network such as 3G or LET.

In an embodiment, the warning device 200 may include a light sensor that may detect light of a strobe light of a warning device installed in a preceding vehicle. In an embodiment, the warning device 200 may detect light of the strobe light of the warning device installed in the preceding vehicle by using a camera 700.

The warning device 200 may determine whether a traffic accident of the preceding vehicle has occurred, by using the light detected by using the light sensor or the camera 700. When determining that a traffic accident of the preceding vehicle has occurred, the warning device 200 may display an emergency signal to a following vehicle by using light of the strobe lights 600 and 610.

In an embodiment, when determining that a traffic accident of the preceding vehicle has occurred, the warning device 200 may request an approval for injecting powder to the user client 100.

When a request for an approval is received from the warning device 200, the user client 100 may display a screen for transmission of an emergency signal for ejecting powder or a cancel as illustrated in FIG. 2. When an input for transmission of an emergency signal is received, the user client 100 may approve the request of the warning device 200, and the warning device 200 may eject powder.

Meanwhile, in this case, when a countdown for a specific period of time displayed on a time information display unit 110 is terminated, the emergency signal may not be transmitted. Because it is not necessary to eject powder as an accident does not correspond to the vehicle having the warning device 200 and the attention of the driver may be distributed for a cancel selection input while the vehicle is driven, the powder may be ejected only when the driver feels that it is necessary to eject power and performs an approval selection input.

In an embodiment, the warning device 200 may include a sensor for detecting powder that is ejected by a warning device of a preceding vehicle. For example, the warning device 200 may include a sensor for detecting a specific material that may be ejected by the powder signal 300. When determining that powder is ejected by the warning device of the preceding vehicle, the warning device 200 of the subject vehicle may determine that a traffic accident of the preceding vehicle has occurred.

In an embodiment, the warning device 200 may include a communication device for performing communication with another warning device. For example, communication may be performed between the warning devices 200 by using a communication network, and the communication may be performed by using a short range communication unit. Further, the warning device 200 may include an infrared ray communication device for performing communication with another warning device.

The warning device 200 of the preceding vehicle may propagate a fact that a traffic accident has occurred to one or more following vehicles by using a communication unit for other warning devices. The fact that the accident has occurred, which is propagated to the following vehicle or the preceding vehicle may be propagated to the following vehicle again.

In an embodiment, the strobe light 600 and 610 of the warning device 200 installed in the preceding vehicle may display a message related to a traffic accident by using a color and a flickering pattern of light.

The warning device 200 installed in the following vehicle may detect the color and the flickering pattern of the light by using a light sensor, and may acquire a message by using the color and the flickering pattern of the light.

The warning device 200 installed in the following vehicle may deliver a message to the following vehicle again by using the color and the flickering pattern of the strobe light 600 and 610.

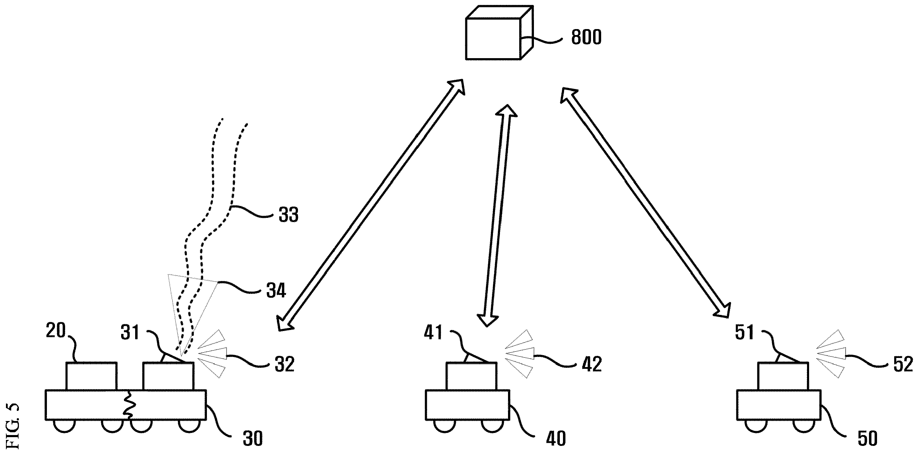

FIG. 5 is a view illustrating an example in which the warning device delivers a warning message to a following vehicle. The warning devices 31, 41, and 51 of FIG. 5 correspond to the warning device 200 of FIGS. 1, 3, and 4.

In an embodiment, a traffic accident in which a second vehicle 30 collides a first vehicle 20 from behind may occur. When the second vehicle 30 includes a warning device 31 according to the embodiment, the warning device 31 may propagate a danger signal by using at least one of the light 32 of the strobe light, powder 33 of the powder signal, and the light 34 of the uplighter.

In an embodiment, a third vehicle 40 that is a following vehicle of the second vehicle 30 may also include a warning device 41 according to the embodiment. In this case, the warning device 41 may detect a danger signal propagated from the warning device 31 of the second vehicle 30.

For example, the warning device 41 may detect the light 32 or the powder 33 of the warning device 31 of the preceding vehicle. Further, the warning device 41 may receive the fact that an accident has occurred through a communication unit for warning devices, from the warning device 31 of the preceding vehicle.

When detecting a danger signal, the warning device 41 may determine that a traffic accident of the second vehicle 30 that is a preceding vehicle has occurred. In this case, the warning device 41 may propagate a danger signal to the following vehicle by using powder or light.

For example, the warning device 41 may propagate a danger signal to a fourth vehicle 50 that is a following vehicle, by using light 42 of a strobe light.

When the fourth vehicle 50 also includes a warning device 51 according to the embodiment, it may detect a danger signal propagated from the third vehicle 40 that is a preceding vehicle, and may in turn propagate a danger signal by using light 52 of the strobe light to a following vehicle.

When the third vehicle 40 safely passes by the scene of the traffic accident, the warning device 41 has to stop propagating the danger signal to the following vehicle to prevent confusion. Accordingly, if a specific period of time elapses after the warning device 41 detects a danger signal from the preceding vehicle and starts to propagate a danger signal to the following vehicle, the warning device 41 may stop propagating the danger signal.

Accordingly, if the vehicle travels by a specific distance after the warning device 41 detects a danger signal from the preceding vehicle and starts to propagate a danger signal to the following vehicle, the warning device 41 may stop propagating the danger signal.

Further, when not detecting a danger signal from the preceding vehicle any more, the warning device 41 may determine that the vehicle deviates from the scene of the traffic accident and may stop propagating a danger signal.

In an embodiment, the strobe light of the warning device 31 installed in the second vehicle 30 may display a message related to a traffic accident by using a color and a flickering pattern of light.

The warning device 41 installed in the third vehicle 40 may detect the color and the flickering pattern of the light by using a light sensor, and may acquire a message by using the color and the flickering pattern of the light.

The warning device 41 installed in the third vehicle 40 may in turn deliver a message to the fourth vehicle 50 that is a following vehicle by using a color and a flickering pattern of the strobe light. The fourth vehicle 50 may detect the color and the flickering pattern of the light by using the warning device 51, and may acquire a message by using the color and the flickering pattern of the light.

For example, the warning devices 31, 41, and 51 may display a distance from the scene of a traffic accident by using a color of light. The warning device 31 of the second vehicle 30 in the scene of a traffic accident may display red light.

The warning device 41 of the third vehicle 40 that is spaced apart from the scene of a traffic accident by a small distance may display yellow light. For example, when detecting red light from the preceding vehicle, the warning device 41 may display yellow light to the following vehicle.

The warning device 51 of the fourth vehicle 50 that is spaced apart from the scene of the traffic accident by a larger distance may display blue light. For example, when detecting yellow light from the preceding vehicle, the warning device 51 may display blue light to the following vehicle.

Further, the warning devices 31, 41, and 51 may deliver a more detailed message by using the flickering pattern of light. For example, the warning devices 31, 41, and 51 may display information such as a number or a letter by using the flickering pattern of light.

In an embodiment, the warning devices 31, 41, and 51 may deliver a message acquired by using a blue color or a flickering pattern of light of the preceding vehicle to the user client 100. The user client 100 may display the acquired message on a screen.

In an embodiment, the warning device 31 may transmit information of a traffic accident to a server 800. Further, the warning device 41 of the third vehicle 40 that is a following vehicle may transmit a message acquired from the warning device 31 to the server 800. Similarly, the warning device 51 of the fourth vehicle 50 may transmit a message acquired from the warning device 41 to the server 800.

The server 800 may determine a state of the scene of the traffic accident by using the message acquired from the warning devices 31, 41, and 51. For example, the server 800 may compare the messages received from the warning devices 31, 41, and 51, may determine the reliability of the messages, and may determine whether a traffic accident actually occurs.

Further, the server 800 may acquire the message displayed by the warning device 31 and may determine the traffic volume of the scene of the traffic accident based on the number of the warning devices that delivers the message to the server 800 and the delivery frequency of the messages. For example, when a message corresponding to the scene of the same traffic accident is delivered from many warning devices or a message corresponding to the scene of the same traffic accident is continuously delivered from new warning devices, it may be determined that the traffic volume of the scene of the traffic accident is large.

The server 800 may determine a state of the scene of the traffic accident by using the message acquired from the warning devices 31, 41, and 51, and may take a necessary measure. For example, the server 800 may deliver the state of the scene of the traffic accident to a police station, a fire station, or an insurance company to allow the police station, the fire station, or the insurance company to take a suitable measure.

Further, the server 800 may acquire a rescue signal that is transmitted by one or more user clients. The server 800 may built and store a database for information on the locations of one or more traffic accidents and the states of the scenes of the one or more traffic accidents by using the message acquired from one or more warning devices and the rescue signals acquired from one or more user clients.

The database stored in the server 800 may interwork with navigation systems used by one or more user clients. Further, the database stored in the server 800 may interwork with a disaster warning system of a government or a private enterprise.

Accordingly, even a driver that does not have a warning device 200 may acquire information on one or more traffic accidents by using the database provided by the server 800.

The user client may update navigation information of the user client by using the database stored in the server 800. For example, the user client may reset a path while avoiding the path in which a traffic accident occurs.

Although it has been described that the warning device 200 propagates a danger signal to neighboring vehicles by ejecting powder, the warning device 200 may be modified to propagate a danger signal by ejecting smoke by using a smoke signal instead of the powder signal. The warning device 200 may eject solid or liquid particles having visual sizes or fine particles.

The steps of a method or an algorithm that have been described in relation to the embodiments of the inventive concept may be directly implemented by hardware, may be implemented by a software module executed by hardware, or may be implemented by a combination thereof. The software module may reside in a random access memory (RAM), a read only memory (ROM), an erasable programmable ROM (EPROM), an electrically erasable programmable ROM (EEPROM), a flash memory, a hard disk, a detachable disk, a CD-ROM, or a computer readable recording medium in an arbitrary form, which is well known in the art to which the inventive concept pertains.

Although the exemplary embodiments of the inventive concept have been described with reference to the accompanying drawings, it will be understood by those skilled in the art to which the inventive concept pertains that the inventive concept can be carried out in other detailed forms without changing the technical spirits and essential features thereof. Therefore, the above-described embodiments are exemplary in all aspects, and should be construed not to be restrictive.

According to the embodiments, because the driver may propagate the fact that a traffic accident has occurred to a following vehicle without risking a danger of directly installing a tripod, a secondary accident may be prevented.

Further, even when the driver is wounded or unconscious due to a traffic accident, a danger signal may be propagated to neighboring vehicles and a request for a rescue may be transmitted to the outside, so that a secondary accident may be prevented and the scene of the traffic accident may be rapidly settled.

Further, by collecting information on a request for a rescue that is transmitted when a traffic accident occurs, information on the traffic accident may be rapidly provided.

The aspect of the inventive concept is not limited thereto, and other unmentioned aspects of the inventive concept may be clearly appreciated by those skilled in the art from the following descriptions.

## Claims

1. A vehicular warning system comprising:
a collision detecting sensor that is installed in a bumper of a vehicle;
a user client that determines whether a traffic accident occurs, by using the collision detecting sensor, displays a screen for selecting between transmission of an emergency signal for ejecting powder and cancellation, when it is determined that a traffic accident has occurred, and transmits an emergency signal when receiving a selection input for selecting transmission of the emergency signal or not receiving any selection input for a specific period of time; and
a warning device that is installed on a roof of the vehicle and comprises a powder signal that is used to propagate a danger signal to neighboring vehicles by ejecting powder, an accommodation portion in which the powder signal is accommodated, and a cover that closes the accommodation portion, the warning device being configured to automatically open the cover when receiving the emergency signal and to eject powder by using the powder signal.

2. The vehicular warning system of claim 1, wherein the warning device further comprises:
an uplighter for illuminating the ejected powder.

3. The vehicular warning system of claim 1, wherein the warning device further comprises:
a strobe light for propagating a danger signal towards at least one of a front side, a lateral side, and a rear side of the vehicle by using light.

4. The vehicular warning system of claim 3, wherein the warning device further comprises:
a light sensor that detects light of a strobe light of a warning device installed in a preceding vehicle, and
wherein the warning device determines whether a traffic accident of the front vehicle has occurred by using the light sensor, and displays an emergency signal to a following vehicle by using the light of the strobe light of the vehicle when determining that the traffic accident of the preceding vehicle has occurred.

5. The vehicular warning system of claim 4, wherein the strobe light of the warning device installed in the preceding vehicle displays a message regarding the traffic accident by using a color and a flickering pattern of the light, and
wherein the warning device detects the color and the flicking pattern of the light of the preceding vehicle by using the light sensor, acquires the message by using the color and the flickering pattern, and delivers the message to the following vehicle by using a color and a flickering pattern of the light of the strobe light of the vehicle.

6. The vehicular warning system of claim 1, wherein the warning device further comprises:
at least one solar panel that is arranged on an outer surface of the warning device to supply electric power to the warning device.

7. The vehicular warning system of claim 1, wherein the warning device further comprises:
a camera for photographing a front side or a rear side of the vehicle, and
wherein the user client receives an image of the front side or the rear side of the vehicle that has been captured by the camera and displays the received image on a screen of the user client.

8. The vehicular warning system of claim 1, wherein the warning device further comprises:
a magnetic pad for attaching the warning device to the roof, and
wherein the magnetic pad is curved based on a deflection of the roof.

9. The vehicular warning system of claim 1, wherein the user client transmits a rescue signal along with the emergency signal, which comprises at least one of the occurrence of the traffic accident and location information of the user client, to a preset contact address.

10. The vehicular warning system of claim 9, further comprising:
a server that acquires a rescue signal that is transmitted by one or more user clients,
wherein the server builds and stores a database for information on locations of the one or more traffic accidents and states of scenes of the one or more traffic accidents by using the required rescue signal.

11. The vehicular warning system of claim 10, wherein the user client updates navigation information of the user client by using the database stored in the server.

12. A vehicular warning device comprising:
a powder signal that is used to propagate a danger signal to neighboring vehicles of a vehicle by using powder;
an accommodation portion in which the powder signal is accommodated; and
a cover that closes the accommodation portion,
wherein the cover is automatically opened when a traffic accident occurs and the powder is ejected by using the power signal.
